(19) Europäisches Patentamt
European Patent Office
Office européen des brevets

(11) **EP 4 749 905 A1**

(12) **EUROPEAN PATENT APPLICATION**
published in accordance with Art. 153(4) EPC

(43) Date of publication:
**27.05.2026 Bulletin 2026/22**

(21) Application number: **23945915.9**

(22) Date of filing: **20.07.2023**

(51) International Patent Classification (IPC):
**H02M 3/28** (2006.01)

(52) Cooperative Patent Classification (CPC):
**H02M 3/28**

(86) International application number:
**PCT/JP2023/026637**

(87) International publication number:
**WO 2025/017913 (23.01.2025 Gazette 2025/04)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **MITSUBISHI ELECTRIC
CORPORATION
Chiyoda-ku
Tokyo 100-8310 (JP)**

(72) Inventors:
• **ASAKURA, Ryota**
**Tokyo 100-8310 (JP)**
• **FUJIWARA, Kenji**
**Tokyo 100-8310 (JP)**
• **SHIROUCHI, Yusuke**
**Tokyo 100-8310 (JP)**
• **KINOSHITA, Tetsunori**
**Tokyo 100-8310 (JP)**

(74) Representative: **Hoffmann Eitle
Patent- und Rechtsanwälte PartmbB
Arabellastraße 30
81925 München (DE)**

(54) **POWER CONVERSION DEVICE, POWER CONVERSION SYSTEM, FLYING OBJECT, AND CONTROL METHOD**

(57) A power conversion device (100) according to the present disclosure includes: a plurality of power conversion units (20) connected in parallel; and a control unit (11) which counts cumulative operation periods of the plurality of power conversion units, performs control so that the cumulative operation period of at least one of the power conversion units is provided with a difference from those of the other power conversion units by firstly operating the power conversion unit having the longest cumulative operation period, and changes a number of operating ones of the plurality of power conversion units.

FIG. 1

**Description**

TECHNICAL FIELD

The present disclosure relates to a power conversion device, a power conversion system, a flying object, and a control method.

BACKGROUND ART

In recent years, electrification of flying objects has been actively going on in various countries in the world for the purpose of reducing carbon dioxide. In electrification of flying objects, a configuration in which a plurality of power conversion units are connected in parallel so as to increase the capacity of a power conversion device, in order to meet a wide range of power demands. Such a power conversion device in which a plurality of power conversion units are connected in parallel so that the capacity is increased is required to be reduced in size and weight and enhanced in efficiency.

As an example of a configuration for enhancing efficiency of a plurality of power conversion units connected in parallel, Patent Document 1 discloses a technology in which one of a plurality of conversion units is operated in accordance with a load current value and thus the number of operating units is switched. By switching the number of operating units as described above, it is possible to perform operation in accordance with the load state, thus achieving highly efficient operation.

CITATION LIST

PATENT DOCUMENT

Patent Document 1: WO2021/182447

SUMMARY OF THE INVENTION

PROBLEM TO BE SOLVED BY THE INVENTION

Here, in electrification of flying objects, continuation of a flight function is important. Therefore, the power conversion device is required to have high reliability and high safety, in addition to high efficiency. For the power conversion device to keep high reliability and high safety, it is necessary to perform maintenance highly frequently as compared to a case of general power conversion devices for industrial or vehicular usage. Therefore, in such a power conversion device used for a flying object, a technology for reducing maintenance cost is required.

The present disclosure has been made to solve the above problem, and an object of the present disclosure is to provide a power conversion device that enables reduction in maintenance cost.

MEANS TO SOLVE THE PROBLEM

A power conversion device according to the present disclosure includes: a plurality of power conversion units connected in parallel; and a control unit which counts cumulative operation periods of the plurality of power conversion units, performs control so that the cumulative operation period of at least one of the power conversion units is provided with a difference from those of the other power conversion units by firstly operating the power conversion unit having the longest cumulative operation period among the plurality of power conversion units, and changes a number of operating ones of the plurality of power conversion units.

A control method according to the present disclosure includes the steps of: counting cumulative operation periods of a plurality of power conversion units; and performing control so that the cumulative operation period of at least one of the power conversion units is provided with a difference by firstly operating the power conversion unit having the longest cumulative operation period among the plurality of power conversion units.

EFFECT OF THE INVENTION

The power conversion device according to the present disclosure makes it possible to reduce maintenance cost for a power conversion device having high efficiency and a large capacity.

BRIEF DESCRIPTION OF THE DRAWINGS

[FIG. 1] FIG. 1 is a circuit diagram showing a configuration of a power conversion device according to embodiment 1 of the present disclosure.

[FIG. 2] FIG. 2 schematically shows a hardware configuration of a control unit of a power conversion device according to embodiment 1 of the present disclosure.

[FIG. 3] FIG. 3 is a graph showing cumulative operation periods of respective power conversion units of the power conversion device according to embodiment 1 of the present disclosure.

[FIG. 4] FIG. 4 is a graph showing switchover of operation in the power conversion device according to embodiment 1 of the present disclosure.

[FIG. 5] FIG. 5 is a graph showing switchover of operation in a case where a cumulative operation period has exceeded a threshold in the power conversion device according to embodiment 1 of the present disclosure.

[FIG. 6] FIG. 6 is a graph showing switchover of operation for each cumulative operation period in the power conversion device according to embodiment 1 of the present disclosure.

[FIG. 7] FIG. 7 is a flowchart showing a control method according to embodiment 1 of the present disclosure.

[FIG. 8] FIG. 8 is a circuit diagram showing a configuration of a power conversion device according to embodiment 2 of the present disclosure.

[FIG. 9] FIG. 9 is a flowchart showing a control method according to embodiment 2 of the present disclosure.

[FIG. 10] FIG. 10 schematically shows a configuration of a flying object according to embodiment 3 of the present disclosure.

[FIG. 11] FIG. 11 schematically shows a configuration of a flying object according to embodiment 4 of the present disclosure.

DESCRIPTION OF EMBODIMENTS

Hereinafter, a power conversion device, a power conversion system, a flying object, and a control method according to the present disclosure will be described with reference to the drawings.

Embodiment 1

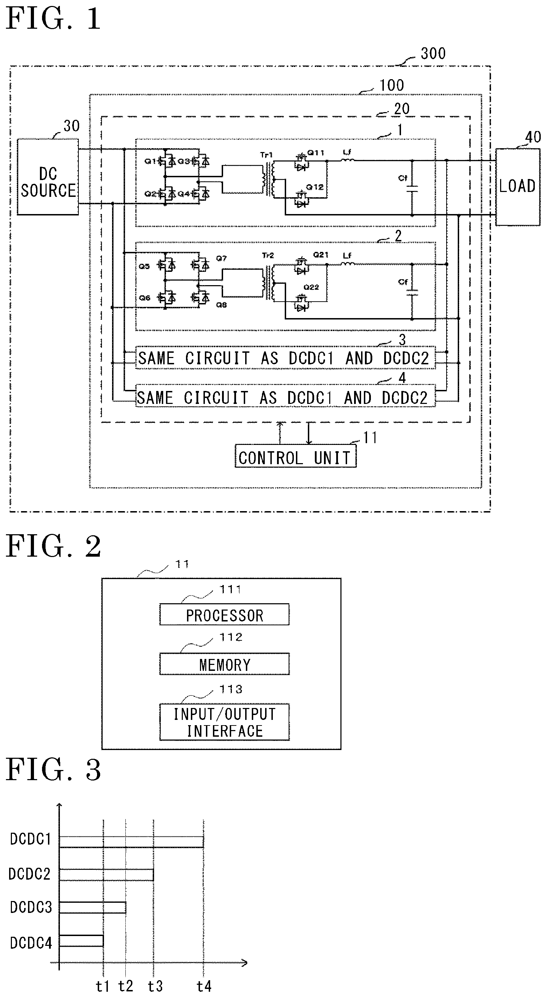

FIG. 1 is a circuit diagram showing a configuration of a power conversion device according to embodiment 1 of the present disclosure. As shown in FIG. 1, a power conversion device 100 is a device that converts DC voltage of a DC source 30 to different DC voltage and supplies power to a load 40, and is, in a central part, composed of four power conversion units having inputs and outputs connected in parallel. The power conversion units in the power conversion device 100 according to embodiment 1 of the present disclosure may have any configurations as long as the number of parallel connected units is switched using semiconductor switches and inputs and outputs are connected in parallel. For example, the power conversion unit may be an inverter (DC-AC) which converts DC voltage to AC voltage, a PWM converter (AC-DC) which converts AC voltage to DC voltage, a DC-DC converter which performs DC voltage conversion, or the like. In the following description, an example of using a DC-DC converter as the power conversion unit is shown.

The power conversion device 100 shown in FIG. 1 includes, as the plurality of power conversion units, a first DC-DC converter 1, a second DC-DC converter 2, a third DC-DC converter 3, and a fourth DC-DC converter 4. Further, the power conversion device 100 includes a control unit 11 which controls the first to fourth DC-DC converters as described later, to achieve a predetermined function of the power conversion device 100.

In the following description, the first DC-DC converter 1 is referred to as DCDC 1, the second DC-DC converter 2 is referred to as DCDC 2, the third DC-DC converter 3 is referred to as DCDC 3, the fourth DC-DC converter 4 is referred to as DCDC 4, and four DC-DC converters are referred to as DCDC 20.

The DC source 30 may be a battery, may be another battery system such as a DC power supply or a solar battery, may be DC voltage obtained by rectifying AC voltage, or may be a DC electrical grid. The load 40 may be a DC load or may be an AC load such as a motor connected using an inverter which converts DC voltage to AC voltage. In FIG. 1, the number of parallel connected units of DCDC 20 is four, but the present disclosure is not limited thereto and the plurality of DC-DC converters may be configured with at least two converters connected in parallel. Although not shown, at least one of a smoothing capacitor, a normal mode filter, and a common mode filter may be provided on the input side of DCDC 1 to DCDC 4. Similarly, at least one of a smoothing capacitor, a normal mode filter, and a common mode filter may be provided on the output side of DCDC 1 to DCDC 4.

Next, a circuit configuration of DCDC 1 will be described. DCDC 2 to DCDC 4 in embodiment 1 have the same circuit configurations and the description thereof is omitted. DCDC 1 is an isolation-type DC-DC converter making isolation using a transformer Tr1. The primary side of the transformer Tr1 has a full-bridge configuration formed of four power semiconductor elements Q1 to Q4, the secondary side of the transformer Tr1 has a center-tapped configuration and a configuration of performing full-wave rectification by power semiconductor elements Q11 and Q12, and a filter section has a configuration of smoothing by a reactor Lf and a capacitor Cf. Regarding the capacitor Cf, size reduction of a filter capacitor can be achieved by an interleaving operation described later, and therefore, in DCDC 20, a plurality of capacitors Cf may be integrally formed. Also for the reactor Lf, as in a coupled reactor, a plurality of reactors Lf in DCDC 20 may be integrated to achieve size reduction. The power semiconductor elements Q1 to Q4, Q11, and Q12 are self-turn-off elements such as IGBT (Insulated Gate Bipolar Transistor) or MOSFET (Metal-Oxide-Semiconductor Field-Effect Transistor). In FIG. 1, a case where MOSFETs are used is shown.

FIG. 2 schematically shows a hardware configuration of the control unit of the power conversion device according to embodiment 1 of the present disclosure. The control unit 11 counts cumulative operation periods of the plurality of power conversion units connected in parallel, performs control so that the cumulative operation period of at least one power conversion unit is provided with a difference from those of other power conversion units by firstly operating a power conversion unit having the longest cumulative operation period, and changes the number of operating ones of the plurality of power conversion units. As shown in FIG. 2, the control unit 11 includes, for controlling DCDC 1 to DCDC 4, a processor 111 such as a CPU (Central Processing Unit), a memory 112 for sending and receiving data to and from the processor 111, an input/output interface 113 through which a signal is inputted/outputted between the processor 111 and the outside, and the like. The power conversion device 100 can change the number of operating units in DCDC 20 by the control unit 11. For example, among the plurality of units DCDC 20, some units may be excluded in operation, whereby loss under a low load can be reduced and efficiency can be enhanced.

As the processor 111, an ASIC (Application Specific Integrated Circuit), an IC (Integrated Circuit), a DSP (Digital Signal Processor), an FPGA (Field Programmable Gate Array), various signal processing circuits, and the like may be provided. A plurality of processors 111 that are the same type or different types may be provided and each process may be executed in a shared manner. As the memory 112, a RAM (Random Access Memory) configured to allow data to be read and written from the processor 111, a ROM (Read Only Memory) configured to allow data to be read from the processor 111, and the like are provided. The input/output interface 113 is composed of, for example, an A/D converter via which detection signals 102 outputted from means such as voltage detection means and current detection means provided to DCDC 1 to DCDC 4 are inputted to the processor 111, a gate drive circuit for driving each switching element, a notification unit described later, and the like.

The control unit 11 performs output voltage control, and current control for DCDC 1 to DCDC 4, on the basis of input voltages and output voltages of DCDC 1 to DCDC 4 and current information about DCDC 1 to DCDC 4, for example. The above current may be primary-side current of the transformer or current of the reactor Lf. On the basis of the detected voltage current information, overvoltage and overcurrent may be detected, and using a protection threshold, the entirety of DCDC 20 or at least one DC-DC converter may be stopped for protection. A temperature sensor may be provided to input temperature information or the like, and protection may be performed using a threshold.

The control unit 11 outputs detection signals 102 for driving the power semiconductor elements Q1 to Q4 on the primary side and the power semiconductors Q11 and Q12 on the secondary side of DCDC 1 to DCDC 4. Gate signals are generated using a triangular-wave comparison method such as PWM (Pulse Width Modulation) control. Meanwhile, the power semiconductors Q11 and Q12 on the secondary side may be subjected to synchronous rectification in order to reduce conduction loss for VF of diodes. Instead of duty control by PWM control, PFM (Pulse Frequency Modulation) control involving frequency control may be performed. Pulse widths to be outputted from the full-bridge circuit on the primary side may be controlled so that symmetric pulses are outputted, or asymmetric pulses may be outputted for performing soft switching or the like.

The control unit 11 counts cumulative operation periods of DCDC 1 to DCDC 4 in the processor 111 or the memory 112. As the cumulative operation period, a gate output time or the like may be counted, or the cumulative operation period may be estimated on the basis of accumulated data of detection information about temperature or current. The power conversion device 100 according to embodiment 1 of the present disclosure may include a notification unit (not shown) for performing a notification when the cumulative operation period of the power conversion unit having the longest cumulative operation period has reached a predetermined cumulative operation period. The predetermined cumulative operation period may be a value that can be set as appropriate by a user in consideration of the product life or the like. The notification unit may perform a notification on the basis of the cumulative operation period by the input/output interface 113, as an external device. A notification may be performed using a light source such as an LED or by sound announcement, for example. As described above, the power conversion device 100 according to embodiment 1 of the present disclosure can encourage a user about necessity of maintenance by performing a notification on the basis of the cumulative operation period.

The control unit 11 may be configured with triangular-wave carrier phases shifted from each other for controlling DCDC 1 to DCDC 4. An operation of shifting phases of a plurality of DC-DC converters so as to cancel out ripples is referred to as an interleaving operation. Performing the interleaving operation makes it possible to reduce the size of an input/output filter. As a method for the interleaving operation, various methods are known, and the interleaving operation can be implemented by control of driving or stopping a plurality of DC-DC converters. For example, an operation of shifting four carrier phases from each other by approximately 45 degrees may be adopted. Alternatively, two carrier phases may be shifted from each other by approximately 90 degrees and four DC-DC converters may be operated with the two carrier phases. Among the four units of DCDC, one unit may be stopped and the carrier phases for three units may be shifted from each other by approximately 60 degrees. Among the four units of DCDC, two units may be stopped and two units may be operated with two carrier phases shifted from each other by approximately 90 degrees. The aforementioned approximately 45 degrees is not smaller than 50 degrees and not greater than 40 degrees, and is preferably not smaller than 44 degrees and not greater than 46 degrees. The same applies to phase angles having other values. The phases may be shifted in any manner as long as ripple can be reduced. The triangular-wave carrier used for PWM switching control may be a saw-tooth carrier.

FIG. 3 is a graph showing cumulative operation periods in the power conversion device according to embodiment 1 of the present disclosure. As shown in FIG. 3, t4 is the cumulative operation period of DCDC 1, t3 is the cumulative operation period of DCDC 2, t2 is the cumulative operation period of DCDC 1, and t4 is the cumulative operation period of DCDC 4. In the control unit 11, in a case where the cumulative operation periods are counted as shown in FIG. 3, the power conversion unit having the longest cumulative operation period is DCDC 1. After specifying the power conversion unit having the longest cumulative operation period as described above, the control unit 11 performs control so that the cumulative operation period of the specified power conversion unit is provided with a difference from those of other power conversion units.

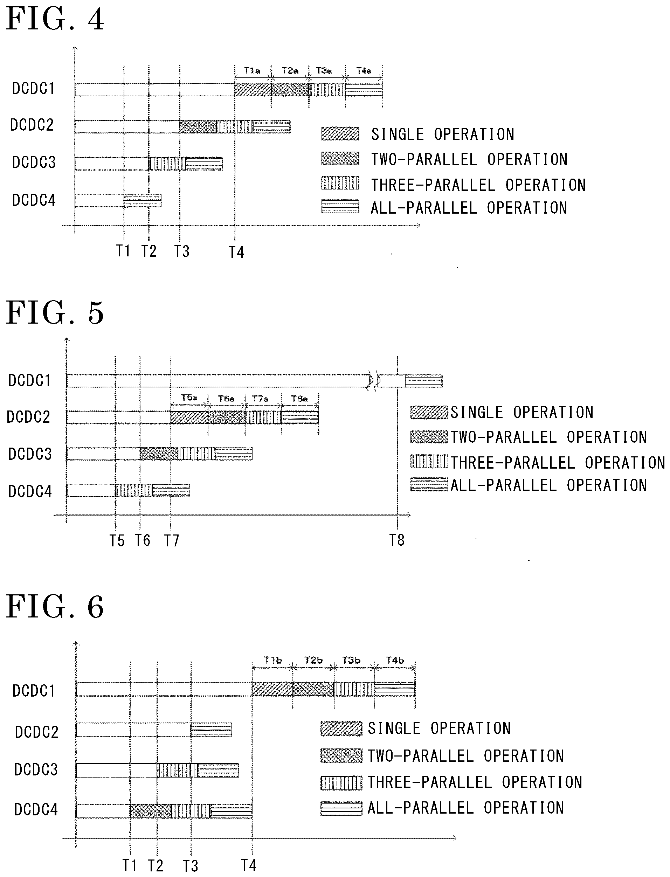

FIG. 4 is a graph showing switchover of operation of the power conversion device according to embodiment 1 of the present disclosure. A case of operating one unit of DCDC 20 is referred to as single operation, a case of operating two units of DCDC 20 is referred to as two-parallel operation, a case of operating three units of DCDC 20 is referred to as three-parallel operation, and a case of operating all four units of DCDC 20 is referred to as all-parallel operation. Regarding the definition of the load state, a load state (single operation, two-parallel operation, three-parallel operation) excluding a state in which the plurality of power conversion devices are all operating is defined as a first load state, and a state (all-parallel operation) in which the plurality of power conversion units connected in parallel are all operating is defined as a second load state. In the power conversion device according to embodiment 1 of the present disclosure, as the load increases, the number of DC-DC converters connected in parallel is increased, thus achieving a large capacity of the conversion device. That is, the control unit 11 can change the number of operating power conversion units in the first load state which is the load state excluding a state in which the plurality of power conversion units connected in parallel are all operating.

In FIG. 4, the cumulative operation periods of DCDC 1 to DCDC 4 are shown in this order from the top of the drawing, and times T1 to T4 indicate the cumulative operation periods at the present time. FIG. 4 shows a case where the number of operating units is changed at next and subsequent times from the present time. In this case, operation from a low load to a high load is described merely for explanation. Operation from a high load to a low load or another load operation is also possible. As shown in FIG. **4, in** operations of DCDC 1 to DCDC **4,** the number of operating units is changed in the descending order of the cumulative operation periods, single operation is performed in a period T1a, two-parallel operation is performed in a period T2a, three-parallel operation is performed in a period T3a, and all-parallel operation is performed in a period T4a.

As described above, in a case where a plurality of the power conversion units are operating in the first load state which is a load state excluding a state in which the plurality of power conversion units connected in parallel are all operating, the control unit 11 can operate other power conversion units excluding the power conversion unit having the longest cumulative operation period among the plurality of power conversion units, in the descending order of the cumulative operation periods. Thus, by providing differences among the cumulative operation periods, it is possible to deteriorate the units of DCDC 20 in a certain order, in other words, inhibit deteriorations in a certain order. Although the case of the descending order has been described above, if the cumulative operation periods are close to each other, the order may be a substantially descending order, and control may be performed in any manner as long as the cumulative operation period of at least one unit of DCDC is provided with a difference.

In a case where a cumulative operation period has exceeded a predetermined threshold, operation of a predetermined DC-DC converter may be stopped in consideration of a risk of failure, breakage, or the like. However, in an aircraft, it is also necessary to continue operation rather than stoppage, in order to keep a flight function. As operation after reaching the threshold, operation may be continuously performed in the descending order of the cumulative operation periods as described above, or the cumulative operation period of the DC-DC converter for which the predetermined threshold is exceeded may be inhibited as described below.

FIG. 5 is a graph showing switchover of operation in a case where a cumulative operation period has exceeded a threshold in the power conversion device according to embodiment 1 of the present disclosure. In FIG. 5, cumulative operation periods of DCDC 1 to DCDC 4 are shown in this order from the top of the drawing, and times T5 to T8 indicate the cumulative operation periods until the present. As in FIG. 4, operation is performed while the number of operating units is changed in the first load state, single operation is performed in a period T5a, two-parallel operation is performed in a period T6a, three-parallel operation is performed in a period T7a, and all-parallel operation is performed in a period T8a. However, unlike FIG. 4, the cumulative operation period of DCDC 1 exceeds a predetermined threshold at time T8. Until reaching time T8, the control unit 11 operates DCDC 1 to DCDC 4 in the descending order of the cumulative operation periods, and after the predetermined threshold is reached, as the next operation, operation is performed in the order from DCDC 2 having the second longest cumulative operation period which has not reached the predetermined threshold, instead of from DCDC 1 for which the predetermined threshold is exceeded.

As described above, in a case where the cumulative operation period of the power conversion unit having the longest cumulative operation period has exceeded a predetermined cumulative operation period, the control unit 11 does not allow the power conversion unit having the longest cumulative operation period to operate in the first load state which is a load state excluding a state in which the plurality of power conversion units connected in parallel are all operating. Thus, the power conversion unit having the excessive cumulative operation period can be controlled within a minimum cumulative operation period.

FIG. 6 is a graph showing switchover of operation for each cumulative operation period in the power conversion device according to embodiment 1 of the present disclosure. Until FIG. 5, a case where the units of DCDC 20 are operated in the descending order of the cumulative operation periods after DCDC 1 having the longest cumulative operation period is operated firstly has been described. Here, as shown in FIG. 6, operations of DCDC 1 to DCDC 4 are performed such that the DC-DC converter (here, DCDC 1) having the longest cumulative operation period is operated firstly and other units DCDC 2 to DCDC 4 are operated in the ascending order. Single operation is performed in a period T1b, two-parallel operation is performed in a period T2b, three-parallel operation is performed in a period T3b, and all-parallel operation is performed in a period T4b. Through such operations, control can be performed so that the operation period of at least one unit of DCDC is provided with a difference, and the other DC-DC converters can be controlled with uniform periods. Here, the wording "uniform" includes a case of being substantially uniform where the cumulative operation period of the DC-DC converter having the longest cumulative operation period is dominant as compared to the other DC-DC converters and the cumulative operation periods of the other DC-DC converters slightly vary but can be considered almost uniform.

As described above, in a case where a plurality of power conversion units are operating in the first load state which is a load state excluding a state in which a plurality of power conversion units connected in parallel are all operating, the control unit 11 performs control so that the cumulative operation periods of other power conversion units excluding the power conversion unit having the longest cumulative operation period are uniformed, whereby deterioration of at least one DC-DC converter can be accelerated and deterioration of the other DC-DC converters can be slowed uniformly.

In the above control, switchover to another DC-DC converter at a certain time during a period of single operation, two-parallel operation, or three-parallel operation has not been described, but such switchover to another DC-DC converter may be performed.

In a case where the DC-DC converter having an excessive cumulative operation period has undergone maintenance or the like, the cumulative operation period may be reset. The number of times of maintenance may be inputted to the control unit 11. As the resetting, change processing by an external signal or change processing via a button or a switch of a circuit board, a housing, or the like may be performed. On the basis of, in addition to the cumulative operation periods described above, information weighted with current values or temperature change amounts, deterioration of a plurality of DC-DC converters may be determined, to perform control for providing a difference in deterioration.

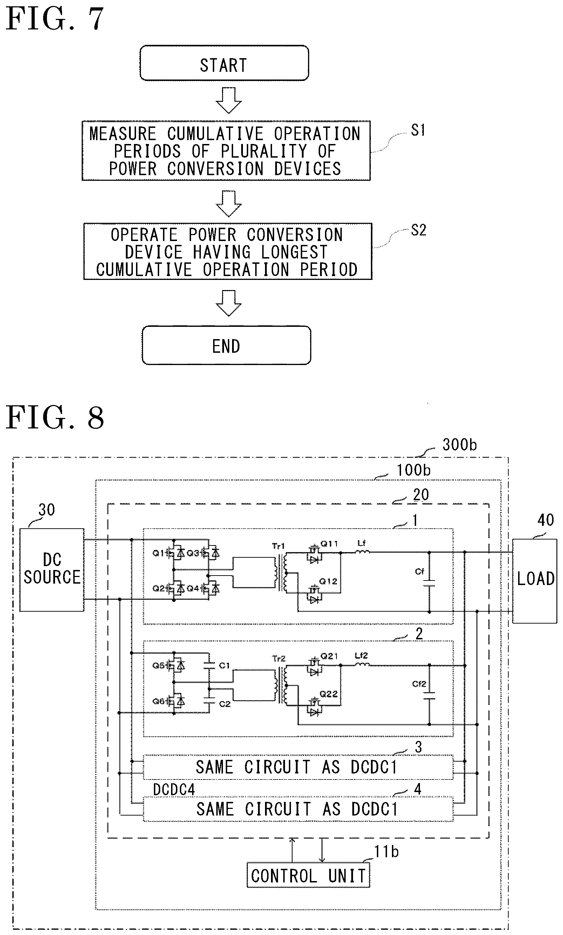

FIG. 7 is a flowchart showing a control method according to embodiment 1 of the present disclosure. As shown in FIG. 6, when control is started, in step S1, the control unit 11 counts the cumulative operation periods of the plurality of power conversion units. Next, in step S2, on the basis of the cumulative operation periods counted in step S1, the control unit 11 performs control such that the power conversion unit having the longest cumulative operation period is operated firstly and the cumulative operation period of at least one power conversion unit is provided with a difference.

As described above, the power conversion device 100 according to embodiment 1 includes: a plurality of power conversion units connected in parallel; and a control unit which counts cumulative operation periods of the power conversion units, performs control so that the cumulative operation period of at least one power conversion unit is provided with a difference from those of other power conversion units by firstly operating the power conversion unit having the longest cumulative operation period, and changes a number of operating ones of the plurality of power conversion units.

A power conversion system 300 according to embodiment 1 of the present disclosure includes the DC source 30 and the power conversion device 100.

In the power conversion device 100, the power conversion system 300, and the control method according to embodiment 1 of the present disclosure, the cumulative operation periods of a plurality of power conversion units are provided with differences (unevenness), so that it becomes possible to perform maintenance of the power conversion unit having an excessive cumulative operation period. Therefore, in each time of maintenance, it suffices that maintenance is performed for not the entirety of the power conversion device and the power conversion system but a part of them, and thus the maintenance cost can be reduced.

In particular, in a case where maintenance is needed highly frequently as for a flying object, the power conversion device 100 is provided, so that it suffices that maintenance is performed for not the entirety of the system but a part thereof, and thus the maintenance cost can be reduced.

When the cumulative operation period has exceeded a predetermined threshold, operation is performed in an order from the power conversion units for which the predetermined threshold has not been reached, whereby the power conversion unit having the excessive cumulative operation period is controlled within a minimum cumulative operation period. The power conversion units other than the power conversion unit having the longest cumulative operation period are operated in the ascending order of the cumulative operation periods, whereby control can be uniformly performed and the cumulative operation periods can be inhibited. Since the cumulative operation periods are inhibited, a risk of possible failure can be eliminated.

In the power conversion device 100 according to embodiment 1 of the present disclosure, the case where the cumulative operation period of DCDC 1 increases has been shown in the example of control in which the cumulative operation period of at least one power conversion unit is provided with a difference from those of other power conversion units. The present disclosure is not limited to this example, and there may be two or more power conversion units having the longest cumulative operation periods.

In order to further improve ease of maintenance of the power conversion device 100, the plurality of power conversion units may be configured as units such as one-touch units, so that the input/output parts can be easily detached.

Embodiment 2

In embodiment 2, the same components as those in embodiment 1 of the present disclosure are denoted by the same reference characters, and the description of the same or corresponding parts is omitted. Hereinafter, with reference to the drawings, a power conversion device 100b according to embodiment 2 will be described.

Embodiment 1 has described the configuration in which a difference is provided among the cumulative operation periods of a plurality of DC-DC converters so that maintenance can be performed for a part of the entirety and thus the maintenance cost can be reduced. Embodiment 2 describes a technology in which, in view of reliability engineering, the failure rates are uniformed, whereby a period until maintenance is prolonged and the maintenance cost is reduced.

FIG. 8 is a circuit diagram showing a configuration of the power conversion device according to embodiment 2 of the present disclosure. The power conversion device 100b according to embodiment 2 of the present disclosure includes a plurality of power conversion units connected in parallel as in embodiment 1, but only DCDC 2 has a different circuit configuration among DCDC 1 to DCDC 4. As shown in FIG. 8, the primary side of the transformer Tr2 is different, i.e., the primary side in FIG. 8 has a half-bridge configuration composed of two power semiconductor elements Q5 and Q6 and two capacitors C1 and C2 forming a neutral point potential. The circuit configurations of DCDC 3 and DCDC 4 are the same as that of DCDC 1 except that symbols are different. That is, the power conversion device 100b according to embodiment 2 of the present disclosure includes a plurality of power conversion units connected in parallel among which the number of semiconductor elements in at least one circuit is different from those in the other circuits. Here, the semiconductor elements are the ones used for power conversion, such as power semiconductor elements.

The reason why only DCDC 2 has a different circuit configuration among DCDC 1 to DCDC 4 shown in FIG. 8 is for further enhancing efficiency in the first load state. By decreasing the number of power semiconductors, switching loss and the like can be reduced, whereby efficiency can be enhanced. In addition, the number of components is decreased, so that reliability is likely to be enhanced. Since the number of power semiconductors decreases, cost reduction can also be expected, and further, since the accompanying components such as a gate driver and a gate power supply can also be decreased, size reduction can also be expected. That is, a configuration in which DCDC 2 having high efficiency operates in the first load state leads to enhancement of efficiency. A disadvantage is that having a half-bridge configuration reduces the power capacity of DCDC 2 as compared to a full-bridge configuration.

Next, a control unit 11b in the power conversion device 100b according to embodiment 2 of the present disclosure will be described. In the control unit 11b, an index called a failure rate is used. The failure rate is the frequency at which a component fails, and is defined as the number of times of failure per unit time. In general, the failure rate is denoted by a Greek alphabet $\lambda$ and is often used in reliability engineering. A FIT value (Failure In Time) is one example of an index and a unit representing the failure rate of a product, and is the average number of times of failure with respect to a predetermined period, e.g., the average number of times of failure per one billion ($10^9$) hours of operation. 10FIT value means that ten products fail in one billion hours. When [FIT value] is defined as [products/$10^9$], the understanding is facilitated (10[FIT value] $\times$ one billion hours = 10 products). In the following description, since the wording "failure rate" might be ambiguous, definition in the present disclosure is made such that the failure rate $\lambda$ of components in the DC-DC converter is defined as a component failure rate $\lambda p$ and the average number of times of failure for a single DC-DC converter is defined as a FIT value. The FIT value is the average number of times of failure per one billion hours, and it is unknown where failure occurs. That is, a small FIT value does not always mean a prolonged life but means high reliability.

Regarding the component failure rate $\lambda p$, a value can be estimated on the basis of MIL standard (MIL-HDBK-217F), for example. It should be noted that the unit of MIL-HDBK-217F is a value per 1 million ($10^6$) hours of operation. As a basic idea, there is a method of calculating the component failure rate $\lambda p$ by multiplying a correction coefficient in accordance with environmental stress using a model formula different for each component. The correction coefficient of environmental stress differs among components. For example, a model formula for a transistor driven at a high frequency is defined by Formula (1), and this formula is applicable also to the MOSFET shown in FIG. 7. Here, $\lambda$b is a component fundamental failure rate, $\pi$T is a temperature element, $\pi$Q is a quality element, and $\pi$E is an environment element.

[Mathematical 1]

$$\lambda p = \lambda b \times \pi T \times \pi Q \times \pi E \qquad (1)$$

The FIT value of a given DC-DC converter is calculated by summation ($\Sigma$) of a product of the component failure rate $\lambda$p and the number m of each component, as shown by Formula (2). Here, 10^3 is for unit matching. In the formula, the FIT value is denoted as FIT.

[Mathematical 2]

$$FIT = \Sigma (\lambda p \times m) \times 10^\wedge 3 \qquad (2)$$

In DCDC 1 to DCDC 4 shown in FIG. 8, FIT of the DCDC 1, DCDC 3, and DCDC 4 is denoted by FIT value_A, and FIT of DCDC 2 having a different circuit configuration is denoted by FIT_B. If there is a component for which the component failure rate $\lambda$p is dominantly high among components, it is also possible to calculate the FIT value for only at least a specific component preferentially. In a case where highly reliable components are used as components of the DC-DC converter, the component failure rate $\lambda$p of a power semiconductor is likely to be highest. In this case, the FIT value may be calculated with only power semiconductors. In the following description, the FIT value is calculated under the assumption that the component failure rates of power semiconductors are high and dominant as compared to other components. However, in a case of performing summation for all the components and calculating the FIT value, the FIT value of DCDC can be calculated more finely. Therefore, performing calculation using all the components is actually preferable.

The control unit 11b of the power conversion device 100b according to embodiment 2 of the present disclosure controls DCDC 1 to DCDC 4 on the basis of the FIT values calculated in advance. In the circuit shown in FIG. 7, FIT_A2 is calculated with four power semiconductors on the primary side and two power semiconductors on the secondary side, and FIT_B2 is calculated with two power semiconductors on the primary side and two power semiconductors on the secondary side. If the component failure rates $\lambda$p are the same, the FIT ratio is FIT_A2:FIT_B2 = 3:2 on the basis of the numbers of power semiconductors. Therefore, if DCDC 1 to DCDC 4 are operated for the same periods, the FIT value of DCDC 2 becomes smaller as compared to DCDC 1, DCDC 3, and DCDC 4 and thus reliability is high. As the FIT values, FIT values of DCDC 1 to DCDC 4 may be calculated in advance and stored as stored variable information in the memory 112 of the control unit 11b. The information may be specific FIT values or may be ratios as described above. Instead of a FIT value calculated using only power semiconductors as described above, a FIT value may be calculated with other components also included.

Next, a method in which failure rates in the power conversion device 100b are uniformed and reliability is uniformed, whereby cumulative operation periods are prolonged and a period until maintenance is prolonged, will be described. In order to uniform failure rates on the basis of the calculated FIT values, the ratios of the FIT values need to be dispersed with cumulative operation periods. In order to perform dispersion, control is performed so that the FIT value $\times$ the cumulative operation period is uniformed. In a case where the circuit configurations of a plurality of DC-DC converters are different as shown in FIG. 7, controlling the failure rates to be uniform in the first load state increases an operation period of DCDC 2 having high efficiency, so that high efficiency and uniformity of the failure rates can be achieved.

While uniformity of the failure rates is kept, the cumulative operation periods may be weighted among a plurality of DC-DC converters, whereby operation is performed so as to prioritize high efficiency in the first load state. In particular, in a case of performing single operation in the first load state, the cumulative operation period of the DC-DC converter having a smaller number of semiconductor elements (here, DCDC 2) may be made longer than those of the other DC-DC converters, whereby uniformity of the failure rates and highly efficient operation can be achieved. In a case of operating a plurality of DC-DC converters, it is preferable that the operation period of a DC-DC converter having high efficiency is inhibited. As a matter of course, although the failure rates cannot be uniformed, in the first load state, the DC-DC converter having high efficiency may be actively operated, and while the FIT value $\times$ the cumulative operation period is calculated, operation may be performed so as to most prioritize high efficiency. When the FIT value $\times$ the cumulative operation period has exceeded a predetermined threshold, operation of the DC-DC converter having high efficiency may be inhibited and the FIT value $\times$ the cumulative operation period may be uniformed so that the failure rates are uniformed.

Next, a calculation example in a case where one SBD (Schottky barrier diode) is connected in parallel to each of two MOSFETs on the secondary side, will be described. Using a Schottky barrier diode can reduce VF loss for an internal diode of the MOSFET. Also for the SBD, the component failure rate can be calculated on the basis of MIL standard, but description will be given under the assumption that the component failure rate λp of the SBD is approximately 0.1 times the component failure rate of the MOSFET. Then, where the FIT value for the same circuit configurations is denoted by FIT_A3 and the FIT value for a different circuit configuration is denoted by FIT_B3, the ratio of the FIT values is calculated as FIT_A3:FIT_B3 = 6.2:4.2. In order to uniform the failure rates, control is performed so that the FIT value × the cumulative operation period is uniformed as described above.

By making the FIT value × the cumulative operation period uniform among the DC-DC converters, the average number of times of failure is uniformed. However, control may be performed so that an MTBF (Mean Time Between Failure) value indicating the average interval between failures obtained by dividing the cumulative operation period by the number of times of failure (corresponding to the FIT value). In the MTBF value, the cumulative operation period and the number of times of failure are used, and therefore control using the MTBF value provides the same effects as in control using the FIT value.

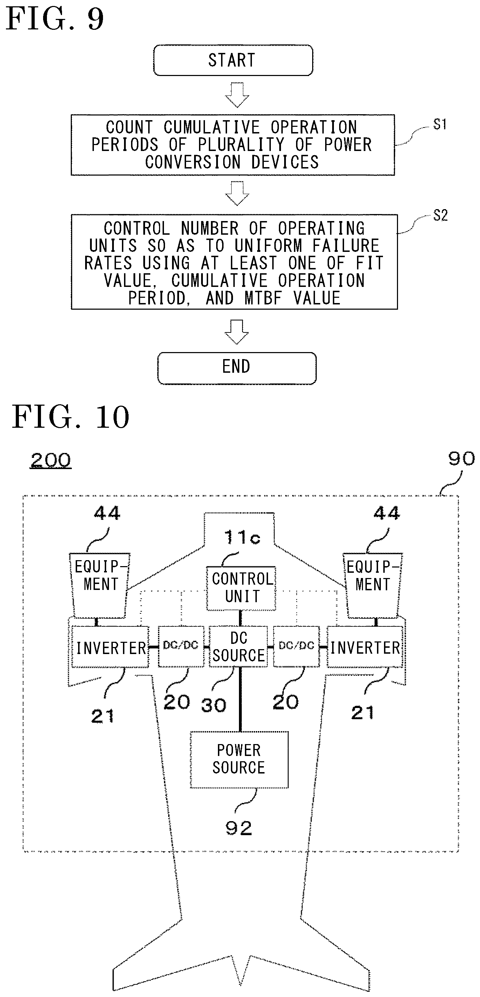

FIG. 9 is a flowchart showing a control method according to embodiment 2 of the present disclosure. As shown in FIG. 9, when control is started, in step S1, the control unit 11b counts cumulative operation periods of a plurality of power conversion units connected in parallel among which the circuit configuration of at least one power conversion unit is different from the circuit configurations of the other power conversion units. Next, in step S2, the control unit 11b changes the number of operating ones of the plurality of power conversion units so as to uniform the failure rates of the plurality of power conversion units, using at least one of the FIT value which is the average number of times of failure with respect to a predetermined period, the cumulative operation period, and the MTBF value calculated from the cumulative operation period and the number of times of failure, of the plurality of power conversion units.

As described above, the power conversion device 100b according to embodiment 2 of the present disclosure includes: a plurality of power conversion units connected in parallel among which a number of semiconductor elements in at least one circuit is different from those in other circuits; and a control unit which counts cumulative operation periods of the plurality of power units, performs control so that failure rates of the plurality of power conversion units are uniformed using at least one of a FIT value which is an average number of times of failure with respect to a predetermined period, the cumulative operation period, and an MTBF value calculated from the cumulative operation period and a number of times of failure, of the plurality of power conversion units, and changes a number of operating ones of the plurality of power conversion units.

With the above configuration, the failure rates based on the average numbers of times of failure and the average intervals between failures can be uniformed, whereby reliability can be uniformed. Thus, a period until maintenance for the entirety can be prolonged, so that the maintenance cost is reduced as in embodiment 1.

In the power conversion device 100b according to embodiment 2 of the present disclosure, estimation of the component failure rates based on MIL standard has been described. However, estimation can be performed using another means. For example, calculation may be performed using a reliability prediction method of Telcordia SR-332, or calculation may be performed using component failure rates calculated on the basis of test data specific to a manufacturer, and component failure rate calculation means.

In embodiment 1 and embodiment 2 of the present disclosure, the case where the DC-DC converters are an isolation type has been described. However, a converter such as a boost converter, a buck converter, or a buck-boost converter of a non-isolation type may be adopted.

Regarding calculation of the FIT value, the present disclosure has described that, as the circuit configurations of the DC-DC converters of an isolation type, the primary sides of the DC-DC converters have different circuit configurations which are a full-bridge configuration and a half-bridge configuration. However, other known circuit configurations may be adopted. Representative examples include a flyback converter, a forward converter, a bridge converter, and a push-pull converter. An additional parallel element may be connected so as to increase the current capacity or reduce loss, or an additional series element for dispersing voltage may be connected. It suffices that a circuit configuration or the number of components is different in at least a part of DCDC and one of DC-DC converters exhibits a different FIT value.

In the power conversion device 100b according to embodiment 2 of the present disclosure, as in embodiment 1, the example in which a DC-DC converter is used as the power conversion unit has been described. However, any power conversion units may be used as long as the number of parallel connected units is switched using semiconductor switches and inputs and outputs are connected in parallel.

As in embodiment 1, the control unit 11b can change the number of operating ones of the power conversion units in the first load state which is a load state excluding a state in which the plurality of power conversion units connected in parallel are all operating.

A power conversion system 300b according to embodiment 2 of the present disclosure includes the DC source 30 and the power conversion device 100b.

The power conversion device 100b according to embodiment 2 of the present disclosure includes a plurality of power conversion units among which the number of semiconductor elements in at least one circuit is different from those in the other circuits. Therefore, at least one power conversion unit has higher efficiency than the other power conversion units. The control unit 11b performs control so that, for the cumulative operation period of a power conversion unit of which the number of semiconductor elements in the circuit is different from those in the circuits of the other power conversion units, a period in which single operation is performed in a first load state which is a load state excluding a state in which the plurality of power conversion units connected in parallel are all operating is made longer than for the cumulative operation periods of the other power conversion units. Thus, further enhancement of efficiency can be achieved. Further, the power conversion unit which partially has a different circuit configuration may be a power conversion unit having a smaller number of components, whereby size reduction and weight reduction can also be achieved.

Embodiment 3

In embodiment 3, a flying object 200 including the power conversion device 100 according to embodiment 1 or embodiment 2 will be described. The flying object 200 is an airplane, a helicopter, a drone, a flying car, or the like, for example.

FIG. 10 schematically shows a configuration of the flying object according to embodiment 3 of the present disclosure. As shown in FIG. 10, the flying object 200 according to embodiment 3 of the present disclosure includes the DC source 30, equipment 44 which operates using power from the DC source 30, and the power conversion device including the plurality of power conversion units and the control unit described in embodiment 1 or embodiment 2. Hereinafter, as in embodiment 1 and embodiment 2 of the present disclosure, an example in which the plurality of power conversion units are DCDC 20 is shown. The flying object 200 is an electric flying object, and includes, as a propulsion-related power system 90 therefor, a power source 92, the DC source 30 connected to the power source 92, an inverter 21 which converts, to AC power, DC power of which voltage is stepped down or down by the DCDC 20 of a buck type, a boost type, or a buck-boost type which is connected to the DC source 30 and performs conversion to predetermined voltage, and the equipment 44 which is supplied with power as a load on the inverter 21.

In the flying object 200 according to embodiment 3 of the present disclosure, the control unit 11c may have a function of controlling the inverter 21 in addition to controlling the DCDC 20. The control unit 11c and the DCDC 20 compose the power conversion device according to embodiment 1 or embodiment 2 of the present disclosure. Here, the control unit 11c may be provided inside the DCDC, or may be provided to a device separate from the DCDC 20. The equipment 44 is equipment that uses power from the DC source 30. The equipment 44 is a propulsion-related load for obtaining a propulsion force, and is, for example, an electric motor.

The flying object 200 according to the present embodiment 3 uses power generated by the power conversion device according to embodiment 1 or embodiment 2 of the present disclosure, as a power supply source for the inverter 21 and the equipment 44 provided to the flying object 200.

As described above, the flying object 200 according to embodiment 3 of the present disclosure includes the DC source 30, the equipment which operates using power from the DC source 30, and the power conversion device including the plurality of power conversion units and the control unit described in embodiment 1 or embodiment 2. Thus, the maintenance cost for the power conversion device provided to the flying object 200 according to embodiment 3 of the present disclosure can be reduced. Owing to reduction in the maintenance cost, safety and reliability of the flying object 200 can be ensured at low cost.

Embodiment 4

In embodiment 4, a flying object 200b including the power conversion device 100 according to embodiment 1 or embodiment 2 will be described. The flying object 200b is an airplane, a helicopter, a drone, a flying car, or the like, for example.

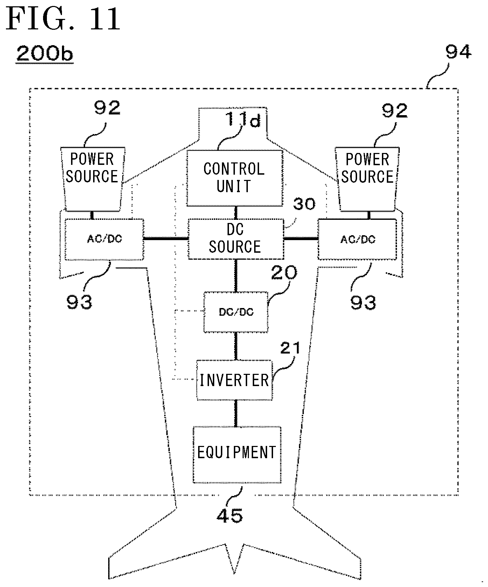

FIG. 11 schematically shows a configuration of the flying object according to embodiment 4 of the present disclosure. The flying object 200b according to embodiment 4 of the present disclosure includes the DC source 30, the equipment 45 which operates using power from the DC source 30, the power source 92 which includes an AC power supply, an AC/DC converter 93 which converts AC power from the power source 92 to DC power, and the power conversion device including the plurality of power conversion units and a control unit 11d described in embodiment 1 or embodiment 2. Hereinafter, as in embodiment 1 and embodiment 2 of the present disclosure, an example in which the plurality of power conversion units are DCDC 20 is shown. The flying object 200b includes, as equipment-related power system 94, the power source 92 including an AC power supply, the AC/DC converter 93 which converts AC power from the power source 92 to DC power, the DC source 30 connected to the AC/DC converter 93, the DCDC 20 of a buck type, a boost type, or a buck-boost type which is connected to the DC source 30 and performs conversion to predetermined voltage, the inverter 21 which converts DC power converted by the DCDC 20 to AC power, and the equipment 45 which is supplied with power as a load on the inverter 21.

In the flying object according to embodiment 4 of the present disclosure, the control unit 11d may have a function of controlling the inverter 21 and the AC/DC converter 93 in addition to controlling the DCDC 20. The control unit 11d and the DCDC 20 compose the power conversion device according to embodiment 1 or embodiment 2 of the present disclosure. The control unit 11d may be provided inside the DCDC 20 or may be provided to a device separate from the DCDC 20.

The equipment 45 is equipment that uses power from the DC source 30, and refers to an air conditioner, an engine starter, an electric motor used for driving an auxiliary power device, or the like, for example. DC power may be supplied to the equipment 45 not via the inverter 21.

As described above, the flying object 200b according to embodiment 4 of the present disclosure includes the DC source 30, the equipment 45 which operates using power from the DC source 30, the power source 92 including an AC power supply, the AC/DC converter 93 which converts AC power from the power source 92 to DC power, and the power conversion device including the plurality of power conversion units and the control unit 11d described in embodiment 1 or embodiment 2. Thus, the maintenance cost for the power conversion device provided to the flying object 200d according to embodiment 4 of the present disclosure can be reduced. Owing to reduction in the maintenance cost, as in embodiment 3, safety and reliability of the flying object 200 can be ensured at low cost.

The configurations described in the above embodiments are merely examples of contents of the present disclosure, and may be combined with other known technologies. The configurations may be partially omitted or changed without deviating from the scope of the present disclosure.

DESCRIPTION OF THE REFERENCE CHARACTERS

1 first DC-DC converter
2 second DC-DC converter
3 third DC-DC converter
4 fourth DC-DC converter
11 control unit
20 DCDC
21 inverter
30 DC source
40 load
44, 45 equipment
90 propulsion-related power system
92 power source
93 AC/DC converter
94 equipment-related power system
100, 100b power conversion device
111 processor
112 memory
113 input/output interface
200, 200b flying object
300, 300b power conversion system

**Claims**

1. A power conversion device comprising:

   a plurality of power conversion units connected in parallel; and
   a control unit which counts cumulative operation periods of the plurality of power conversion units, performs control so that the cumulative operation period of at least one of the power conversion units is provided with a difference from those of the other power conversion units by firstly operating the power conversion unit having the longest cumulative operation period among the plurality of power conversion units, and changes a number of operating ones of the plurality of power conversion units.

2. A power conversion device comprising:

   a plurality of power conversion units connected in parallel among which a number of semiconductor elements in at least one circuit is different from those in the other circuits; and
   a control unit which counts cumulative operation periods of the plurality of power conversion units, performs control so that failure rates of the plurality of power conversion units are uniformed using at least one of a FIT value which is an average number of times of failure with respect to a predetermined period, the cumulative operation period, and an MTBF value calculated from the cumulative operation period and a number of times of failure, of the plurality of power conversion units, and changes a number of operating ones of the plurality of power conversion units.

3. The power conversion device according to claim 1 or 2, wherein
the control unit changes the number of operating ones of the power conversion units in a first load state which is a load state excluding a state in which the plurality of power conversion units connected in parallel are all operating.

4. The power conversion device according to claim 1, further comprising a notification unit which performs a notification when the cumulative operation period of the power conversion unit having the longest cumulative operation period has reached a predetermined cumulative operation period.

5. The power conversion device according to claim 1, wherein
in a case where a plurality of the power conversion units are operating in a first load state which is a load state excluding a state in which the plurality of power conversion units connected in parallel are all operating, the control unit operates the other power conversion units excluding the power conversion unit having the longest cumulative operation period among the plurality of power conversion units, in a descending order of the cumulative operation periods.

6. The power conversion device according to claim 1, wherein
in a case where a plurality of the power conversion units are operating in a first load state which is a load state excluding a state in which the plurality of power conversion units connected in parallel are all operating, the control unit performs control so that the cumulative operation periods of the other power conversion units excluding the power conversion unit having the longest cumulative operation period are uniformed.

7. The power conversion device according to any one of claims 1, 4, 5, and 6, wherein
in a case where the cumulative operation period of the power conversion unit having the longest cumulative operation period has exceeded a predetermined cumulative operation period, the control unit does not allow the power conversion unit having the longest cumulative operation period to operate in a first load state which is a load state excluding a state in which the plurality of power conversion units connected in parallel are all operating.

8. The power conversion device according to claim 2, wherein
the control unit performs control so that, for the cumulative operation period of the power conversion unit of which the number of the semiconductor elements in the circuit is different from those in the circuits of the other power conversion units, a period in which single operation is performed in a first load state which is a load state excluding a state in which the plurality of power conversion units are all operating is made longer than for the cumulative operation periods of the other power conversion units.

9. A power conversion system comprising:

   a DC source; and
   the power conversion device according to any one of claims 1 to 8.

10. A flying object comprising:

   a DC source;
   equipment which operates using power from the DC source; and
   the power conversion device according to any one of claims 1 to 8.

11. The flying object according to claim 10, further comprising:

   a power source including an AC power supply; and
   an AC/DC converter which converts AC power from the power source to DC power.

12. A control method comprising the steps of:

   counting cumulative operation periods of a plurality of power conversion units; and

performing control so that the cumulative operation period of at least one of the power conversion units is provided with a difference by firstly operating the power conversion unit having the longest cumulative operation period among the plurality of power conversion units.

**13.** A control method comprising the steps of:

counting cumulative operation periods of a plurality of power conversion units connected in parallel among which a number of semiconductor elements in at least one circuit is different from those in the other circuits; and changing a number of operating ones of the plurality of power conversion units so as to uniform failure rates of the plurality of power conversion units using at least one of a FIT value which is an average number of times of failure with respect to a predetermined period, the cumulative operation period, and an MTBF value calculated from the cumulative operation period and a number of times of failure, of the plurality of power conversion units.

# FIG. 1

300

100

20

1

30

DC SOURCE

Q1 Q3
Q2 Q4

Tr1

Q11 Lf
Q12

Cf

40

LOAD

2

Q5 Q7
Q6 Q8

Tr2

Q21 Lf
Q22

Cf

3
SAME CIRCUIT AS DCDC1 AND DCDC2

4
SAME CIRCUIT AS DCDC1 AND DCDC2

11
CONTROL UNIT

# FIG. 2

11

111
PROCESSOR

112
MEMORY

113
INPUT/OUTPUT INTERFACE

# FIG. 3

DCDC1

DCDC2

DCDC3

DCDC4

t1 t2 t3 t4

# FIG. 4

DCDC1 · · · T1a · T2a · T3a · T4a
DCDC2
DCDC3
DCDC4

T1 T2 T3 T4

SINGLE OPERATION
TWO-PARALLEL OPERATION
THREE-PARALLEL OPERATION
ALL-PARALLEL OPERATION

# FIG. 5

DCDC1
DCDC2 · · · T5a · T6a · T7a · T8a
DCDC3
DCDC4

T5 T6 T7 T8

SINGLE OPERATION
TWO-PARALLEL OPERATION
THREE-PARALLEL OPERATION
ALL-PARALLEL OPERATION

# FIG. 6

DCDC1 · · · T1b · T2b · T3b · T4b
DCDC2
DCDC3
DCDC4

T1 T2 T3 T4

SINGLE OPERATION
TWO-PARALLEL OPERATION
THREE-PARALLEL OPERATION
ALL-PARALLEL OPERATION

# FIG. 7

```
         START
           ⬇
MEASURE CUMULATIVE OPERATION      S1
   PERIODS OF PLURALITY OF
 POWER CONVERSION DEVICES
           ⬇
 OPERATE POWER CONVERSION         S2
  DEVICE HAVING LONGEST
CUMULATIVE OPERATION PERIOD
           ⬇
          END
```

# FIG. 8

# FIG. 9

```
┌─────────────┐
│    START    │
└─────────────┘
       ⇩
┌──────────────────────────────┐
│   COUNT CUMULATIVE OPERATION  │   S1
│ PERIODS OF PLURALITY OF POWER │
│      CONVERSION DEVICES       │
└──────────────────────────────┘
       ⇩
┌──────────────────────────────┐
│   CONTROL NUMBER OF OPERATING │   S2
│  UNITS SO AS TO UNIFORM FAILURE│
│  RATES USING AT LEAST ONE OF FIT│
│   VALUE, CUMULATIVE OPERATION │
│    PERIOD, AND MTBF VALUE     │
└──────────────────────────────┘
       ⇩
┌─────────────┐
│     END     │
└─────────────┘
```

# FIG. 10

# FIG. 11

200b

# INTERNATIONAL SEARCH REPORT

| | International application No. |
|---|---|
| | **PCT/JP2023/026637** |

**A. CLASSIFICATION OF SUBJECT MATTER**

*H02M 3/28*(2006.01)i
FI:  H02M3/28 W

According to International Patent Classification (IPC) or to both national classification and IPC

**B. FIELDS SEARCHED**

Minimum documentation searched (classification system followed by classification symbols)

H02M3/28

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| Y | JP 2012-161215 A (DAIHEN CORP.) 23 August 2012 (2012-08-23) paragraphs [0003], [0004], fig. 9 | 2-4, 9-11, 13 |
| A | | 1, 5-8, 12 |
| Y | WO 2020/144796 A1 (MITSUBISHI ELECTRIC CORPORATION) 16 July 2020 (2020-07-16) paragraphs [0012]-[0015], fig. 1 | 2-4, 9-11, 13 |
| Y | JP 2007-280187 A (TOSHIBA MITSUBISHI-ELECTRIC INDUSTRIAL SYSTEMS CORPORATION) 25 October 2007 (2007-10-25) paragraphs [0036], [0037], [0051], [0052], fig. 3, 8 | 2-4, 9-11, 13 |
| Y | JP 2020-181468 A (KABUSHIKI KAISHA TOSHIBA) 05 November 2020 (2020-11-05) paragraph [0013] | 2-4, 9-11, 13 |
| Y | JP 2010-259237 A (PANASONIC ELECTRIC WORKS CO., LTD.) 11 November 2010 (2010-11-11) paragraph [0002] | 4 |

☑ Further documents are listed in the continuation of Box C.       ☑ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **22 September 2023** | **03 October 2023** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

## INTERNATIONAL SEARCH REPORT

| International application No. |
| --- |
| **PCT/JP2023/026637** |

**C.    DOCUMENTS CONSIDERED TO BE RELEVANT**

| Category* | Citation of document, with indication, where appropriate, of the relevant passages | Relevant to claim No. |
| --- | --- | --- |
| A | JP 2018-137854 A (TDK CORPORATION) 30 August 2018 (2018-08-30) entire text, all drawings | 1-13 |

Form PCT/ISA/210 (second sheet) (January 2015)

## INTERNATIONAL SEARCH REPORT
### Information on patent family members

International application No.

**PCT/JP2023/026637**

| Patent document cited in search report | | | Publication date (day/month/year) | Patent family member(s) | Publication date (day/month/year) |
|---|---|---|---|---|---|
| JP | 2012-161215 | A | 23 August 2012 | (Family: none) | |
| WO | 2020/144796 | A1 | 16 July 2020 | (Family: none) | |
| JP | 2007-280187 | A | 25 October 2007 | (Family: none) | |
| JP | 2020-181468 | A | 05 November 2020 | (Family: none) | |
| JP | 2010-259237 | A | 11 November 2010 | (Family: none) | |
| JP | 2018-137854 | A | 30 August 2018 | (Family: none) | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2021182447 A